(19) Europäisches Patentamt

European Patent Office

Office européen des brevets

(11) **EP 1 356 962 A1**

(12) **EUROPEAN PATENT APPLICATION**

(43) Date of publication:
**29.10.2003 Bulletin 2003/44**

(51) Int Cl.⁷: **B60G 3/24**, B60G 3/26,
B60K 17/30, B60K 17/22,
B62D 49/06

(21) Application number: **03101121.6**

(22) Date of filing: **24.04.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **24.04.2002 IT BO20020239**
**29.08.2002 EP 02078551**

(71) Applicant: **CNH Italia S.p.A.**
**41100 Modena (IT)**

(72) Inventor: **Bordini, Giorgio**
**38003 Santa Cruz de Tenerife (ES)**

(74) Representative: **Vandenbroucke, Alberic et al**
**CNH Belgium N.V.**
**Patent Department**
**Leon Claeysstraat, 3A**
**8210 Zedelgem (BE)**

(54) **Suspended, articulated and powered front axle for vehicles.**

(57)     A suspended articulated front axle (Pa) for vehicles (T2), in particular farm tractors (T2), wherein each axle shaft (S1', S2') has at least one portion (17a) whose longitudinal axis of symmetry (k) slopes by a sweep-back angle (f) with respect to a line (t') perpendicular to the longitudinal axis of symmetry (s') of the vehicle (T2); the sweep-back angle (f) being such that the outer end of the sloping portion (17a) is located further back than the inner end of the portion (17a) in the common forward travelling direction of the vehicle (T2).

Fig.5

EP 1 356 962 A1

Printed by Jouve, 75001 PARIS (FR)

**Description**

The present invention relates to a suspended, articulated and powered front axle for vehicles, in particular tractors.

In the following description, the axle is referred to as a "powered front axle", considering that in addition to the rear driven wheels, the tractor is also given motion by means of the front wheels. In tractor applications, it is conventional that the front axle presents a rigid, transverse structure which is hingeably attached to the front of the tractor chassis for swivelling, transverse movement around the longitudinal middle axle of the tractor. With such an arrangement, when one front wheel is lifted over a certain distance, the other front wheel has to come down over the same distance. Other types of axles are known which, as opposed to being rigid, have articulated end portions, each carrying a front wheel. Each such end portion comprises a deformable system and has a suspension device to which are transmitted part of the mass of the tractor and the internal and external stresses exchanged between the tractor and the ground via a front wheel. The suspension devices may operate independently from each other so that each front wheel may move up or down without influencing movement of the other front wheel.

In the farm tractor industry, solutions comprising an articulated axle, which in addition are powered and comprise suspension devices, are known.

A tractor, which due to the nature of the operations to be performed frequently has to make sharp turns, needs to have a small turning radius so as to improve the manoeuvrability. In one particular known solution, to reduce the turning radius of the tractor, all other conditions being the same, the wheelbase, i.e. the distance between the front and rear axle, is reduced.

It is common to use so-called structural engines in agricultural vehicles, such as tractors, where the engine block, together with its transmission train, forms part of the unsprung mass or chassis of the vehicle and is relied upon to assure the structural rigidity of the tractor. The front of the engine carries a front support member to which the front axle is hingeably mounted. This front support typically also supports the engine radiator and provides means for attaching the tractor balancing weights.

A major drawback of reducing the wheelbase, as referred to above, while maintaining the conventional front axle structure, lies in the front axle having to be hinged further back to the front support member, so that it becomes located directly beneath the front of the engine. Considering that the ground clearance at the front of the engine is less than the ground clearance of the front support member, due to the presence of the engine shafting and oil sump, it will be appreciated that shifting the front axle rearwardly has serious implications on the vertical position of the engine. Indeed, to provide space for the front axle, the engine and the drive train as a whole need to be raised, thus also raising the center of gravity, and impairing the stability, of the tractor. Furthermore, since an additional anchorage point for the front axle has to be provided on the lower front of the engine, a major part of the stress and load from the powered axle is transmitted directly to the engine block and sump, as opposed to otherwise being taken up by the front axle bearing specifically designed to support the front axle. This unavoidably requires further measures to increase the rigidity and structural strength of the engine, resulting in higher manufacturing costs. Moreover, in this known solution, the problem of raising the engine is further compounded by the differential casing (needed for a driven front axle) also having to be located beneath the front of the engine.

It is therefore an object of the present invention to provide a vehicle having a suspended, articulated and powered front axle presenting a reduced wheel base which is not subjected to the aforementioned drawbacks.

According to the present invention, there is provided a suspended, articulated front axle, as defined in claim 1.

In the present invention, the problem of shortening the wheelbase to reduce the turning radius of the tractor without interfering with the engine is solved by a sweep-back configuration of at least left and rights portions of the front axle. The term "sweep-back" is intended to mean that the outer, opposite ends of the front axle are further back with respect to the central portion as seen in the common forward travelling direction of the tractor, so that the longitudinal axis of symmetry of each outer axle portion forms an angle of other than zero with a line drawn perpendicular to the longitudinal axis of symmetry of the tractor and through the axis of the front axle differential.

The present invention will now be described further, by way of example, with reference to the accompanying drawings, in which:

Figure 1a shows a known tractor front axle solution;
Figure 1b shows, schematically, a suspended, articulated and powered front axle for tractors, said front axle being the main object of the present invention;
Figure 1c shows the increased turning angle of the front wheels resulting in a smaller turning radius as a consequence of reducing the wheelbase and providing sweep-back;
Figure 2 shows a schematic, exploded view of a portion of a first embodiment of the front axle according to the present invention;
Figure 3 shows a partial side view of the axle shown schematically in Figures 1b, 1c and 2;
Figure 4 shows a front view, partially in section, of the axle shown schematically in Figures 1b, 1c, 2 and 3;
Figure 5 shows a partial plan view of the axle shown schematically in Figure 4;
Figure 6 shows a view in perspective of a second embodiment of the present invention;
Figure 7 shows a partial side view of the second embodiment in Figure 6;
Figure 8 shows a partial, sectional front view of the second embodiment in Figure 6;
Figure 9 shows a partial plan view of the second embodiment in Figure 6;
Figure 10 shows the main elements of the second embodiment suspension mechanism;
Figure 11a shows the way a wheel in the prior art (Figure 1a) turns;
Figure 11b shows the way a wheel forming part of the innovative axle in Figures 1b-10 turns; and
Figure 12 shows how the front wheels of the innovative axle in Figures 1b-10 self-align in the event either of the front wheels loses traction.

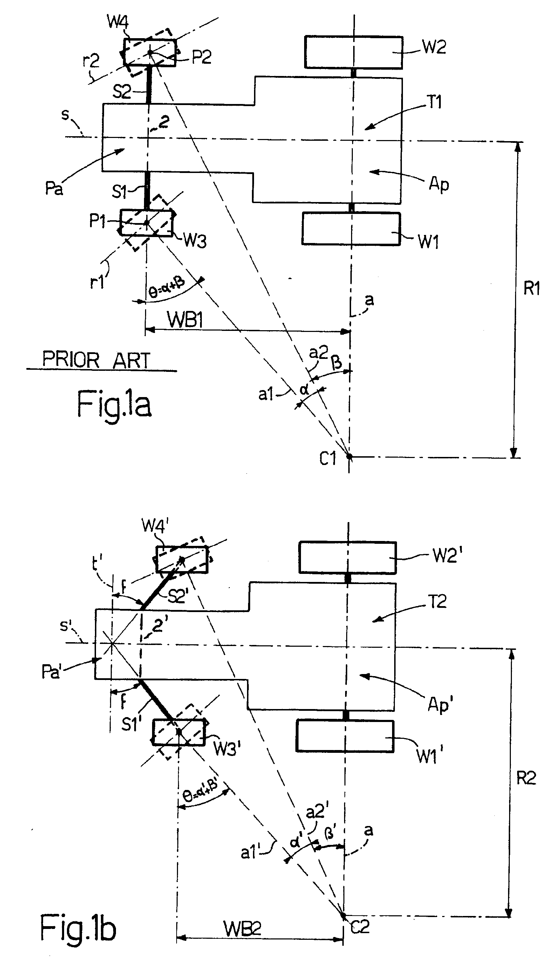

Figure 1a shows, schematically, a conventional tractor T1, in which steering is effected by a front axle Pa. The instantaneous turning center C1 of tractor T1 is located along an axis a of a rear axle Ap comprising two non-directional wheels W1, W2. More specifically, instantaneous turning center C1 is defined as the point at which the projection of rear axis a in the horizontal plane (in other words the plane of the drawing) intersects the projections, in the horizontal plane, of the two horizontal turning axes a1, a2 of the front wheels W3, W4 of front axle Pa. More specifically, axis a1 is perpendicular to the centerline plane r1 of wheel W3, and axis a2 is perpendicular to the centerline plane r2 of wheel W4, when wheels W3, W4 are in their maximum-turning position shown in Figure 1a. In actual fact, front wheel W3 turns about an axis through a point P1 on the centerline within wheel W3, and wheel W4 about an axis through a point P2 on the centerline within wheel W4. Wheels W3, W4 are turned by means of respective hydraulic actuators (not shown in Figure 1a).

The distance between the projections, in the horizontal plane, of the transverse axes of symmetry of the axle shafts of front wheels W3, W4 connected to front axle Pa, and of the transverse axis of symmetry of axle Ap of rear wheels W1, W2 defines the wheelbase WB1 of the body of tractor T1.

As shown in Figure 1a, front wheels W3, W4 have different turning angles. That is, axes a1, a2 perpendicular to r1, r2 form an angle $\alpha$ which is the maximum difference between the turning angles of wheels W3 and W4. In other words, the inside wheel W3 in the turn, turns more than the outside wheel W4, which is a known requirement for correct steering. This is easily understood since the inner wheel W3 lies closer to the instantaneous turning center C1 than the wheel W4, resulting in a smaller turning radius, and hence a larger turning angle for the inner wheel W3.

In fact, if $\beta$ is the turning angle of wheel W4 (the "outer" wheel), then $\alpha+\beta$ is the turning angle of wheel W3 (the "inner" wheel), so that axes a1, a2 of wheels W3, W4 both converge at center C1 located, as stated, along axis a of rear axle Ap.

In conventional solutions, however, the maximum turning angle $\alpha=\alpha+\beta$ of the inside wheel W3 is limited by two major factors:

-   the maximum angle permitted by the transmission joint (not shown in Figure 1a) between each wheel W3, W4 and respective axle shaft S1, S2; in other words, the maximum turning angle is imposed by the transmission device, and is normally in the range of 50-55°; and
-   possible interference between wheels W3, W4 (and/or their associated mudguards) and the body of tractor T1 at high turning angles; for this reason, in some known embodiments, the body of tractor T1 is made slimmer to give wheels W3, W4 more space to turn, necessitating serious re-design of the engine however; in others, as stated, to reduce the turning radius, wheelbase WB1 is shortened by moving front axle Pa closer to rear axle Ap, with all the aforementioned drawbacks this entails.

Figure 1b shows, schematically, the configuration of wheels W1', W2' of rear axle Ap', and wheels W3', W4' of front axle Pa' according to the present invention.

According to the present invention, a sweep-back angle f provides for reducing the wheel-base from the WB1 value (Figure 1a) to a reduced value WB2 (Figure 1b), thus improving the turning performance of the body of the tractor T2. In this context, "sweep-back angle f" is intended to mean the angle formed by each axle shaft S1', S2' with a line t' perpendicular to the longitudinal axis of symmetry s' of the body of tractor T2.

When comparing Figures 1a and 1b, it will be appreciated that the central part 2 of front axle Pa (i.e. the part underneath the front end of the tractor chassis), is at exactly the same location as the central part 2' of front axle Pa'. As will become apparent furtheron, this has an advantageous effect on the overall configuration of the tractor.

For a given, "normally" maximum turning angle (i.e. when wheel W3' in Figure 1b is set to a configuration parallel to that of wheel W3 in Figure 1a), instantaneous turning center C1 moves up to center C2, consequently reducing the turning radius from R1 to R2 (compare Figures 1a and 1b). As a result, angle $\alpha$ is increased to $\alpha'$, whereas angle $\beta$ is reduced to $\beta'$, the sum $\alpha' + \beta'$ still being equal to $\alpha$ however.

As a side remark, with reference to Figure 1b, it is observed that axis a1' is not in line with axle shaft S1', since the angel of S1' is determined by angle f whereas the angle of a1' is determined by the "normally" maximum turning angle of wheel W3'.

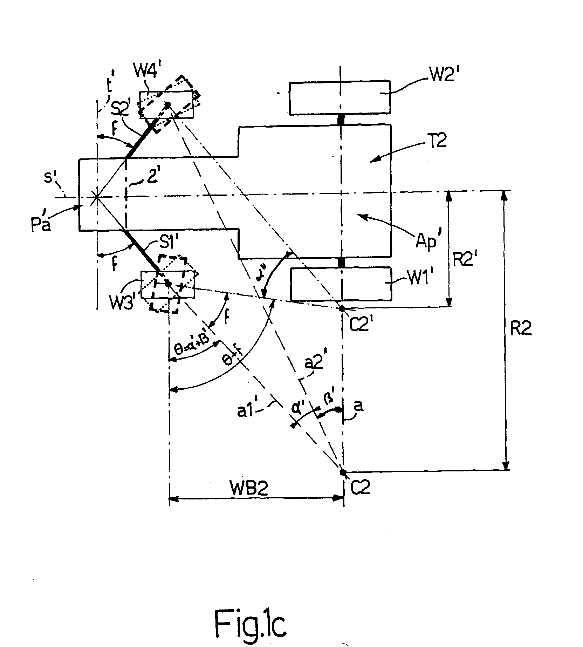

Moreover, in addition, as a result of sweep-back angle f of axle shafts S1' and S2', for a given maximum angle permitted by the end joint of each axle shaft S1', S2', the inside wheel W3' can be turned by an angle equal to sweep-back angle f plus the maximum angle $\alpha$ permitted by the joint, so that the instantaneous turning center can be moved even closer to tractor T2, from C2 (Figure 1b) to C2', as shown in Figure 1c, thus further improving the turning performance of tractor T2.

In the case of the present invention therefore (Figure 1c), the inner wheel W3' can turn by a total maximum angle of $\alpha+f$, where $\alpha$ has a maximum value of 50-55° (equal to $\alpha'$ + $\beta'$). In a practical example where the wheelbase is 3200 mm and the track width 1800 mm, angle f may vary around 8°, and thus the maximum turning angle of inner wheel W3' may be approximately 63°. Conversely, the outer wheel W4' can turn at most by an angle $\alpha$-f, where $\alpha$ again has a maximum value of 50-55°. Indeed, since the drive train of the outer wheel W4' already enters the wheel under an angle f oriented in the same direction as to which the outer wheel will turn, the maximum steering angle of 55° is no longer available and has to be reduced by the value of angle f.

Although this configuration would appear to penalize the outer wheel W4', this does not impose any limiting turning restrictions to the overall system because, as we have seen, the outer wheel W4' anyhow always turns by a smaller angle than inner wheel W3'. As seen in Figure 1c, the difference in turning angle between wheels W3' and W4' is $\alpha''$. Therefore, when $\alpha''$ is larger than f, no turning restrictions are imposed on the outer wheel W4'. And this is indeed the case as, since $\alpha''$ represents the difference in turning angle between the inner wheel W3' and outer wheel W4', the following equation can be made :

$$\alpha'' = (\alpha+f) - (\alpha-f)$$

or

$$\alpha'' = 2f$$

Since the difference $\alpha''$ between the turning angles of wheels W3' and W4' is inversely proportional to the wheelbase of tractor T2, and since the maximum permissible sweep-back (fmax) equals half angle $\alpha''$, as shown, the turning angle of the outside wheel W4' will be further reduced with respect to that of inside wheel W3' when the wheelbase is shortened.

Therefore, when executing the sharpest turn, the inside wheel W3' turns at most by angle $\alpha$, imposed by the transmission device, plus sweep-back angle f, while the outside wheel W4' turns at most by angle $\alpha$ minus sweep-back angle f, thus still meeting the conditions required for correct steering.

In other words, sweep-back angle f reduces the turning radius of tractor T2 twofold, i.e.:

- a first reduction by reducing the wheelbase (from WB1 in Figure 1a to WB2 in Figure 1b) so that the turning radius goes from R1 in Figure 1a to R2 in Figure 1b; and
- a second reduction of the turning radius from R2 (Figure 1b) to R2', as shown in Figure 1c; this being enabled by increasing the turning angle of inner wheel W3' from $\alpha$ (Figure 1b) to $\alpha+f$, where f may assume a maximum value of $\alpha''/2$.

As already mentioned, the solution according to the present invention, while providing a reduced wheelbase and additionally an increased turning angle of the inner wheel, nevertheless enables the front axle Pa' to be connected to the front axle support member, in other words the body portion of the tractor T2 specifically designed for the purpose, as opposed to being connected further back beneath the engine, with all the entailing drawbacks.

However, turning by an increased angle $\alpha+f$, greater than $\alpha$, entails another problem which has to be solved before being able to fully make use of the increased turning angle of the inner wheel. Indeed, as a result of the increased turning angle $\alpha+f$ and upon maximum steering lock, the inner wheel W3' (or its associated mudguard) may interfere with the body of tractor T2.

To solve the above problem, the geometry of the suspensions of axle shafts S1', S2' must be designed to enable a less pronounced approach of the wheels W3' and W4' towards the body of the tractor T2 in the potential interference area, when turning to a full steering lock.

The way this can be achieved by appropriately selecting the turning axis of each front wheel W3', W4' is described below.

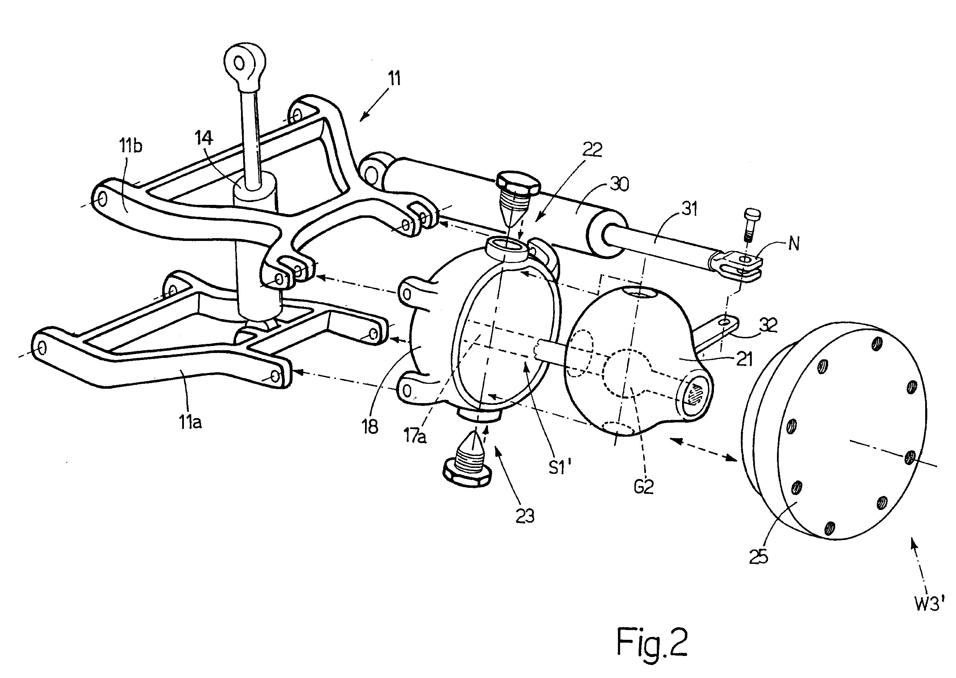

Figures 2-5 show a first embodiment of the present invention illustrating in detail the component parts of the system connecting wheel W3' to the body of tractor T2. It will be appreciated that the suspension configuration of wheel W4' is a mirror image of wheel W3', and therefore doesn't need to be described in detail. Also, although W3' is described as being the inner wheel and W4' as the outer wheel, their function of course may be reversed.

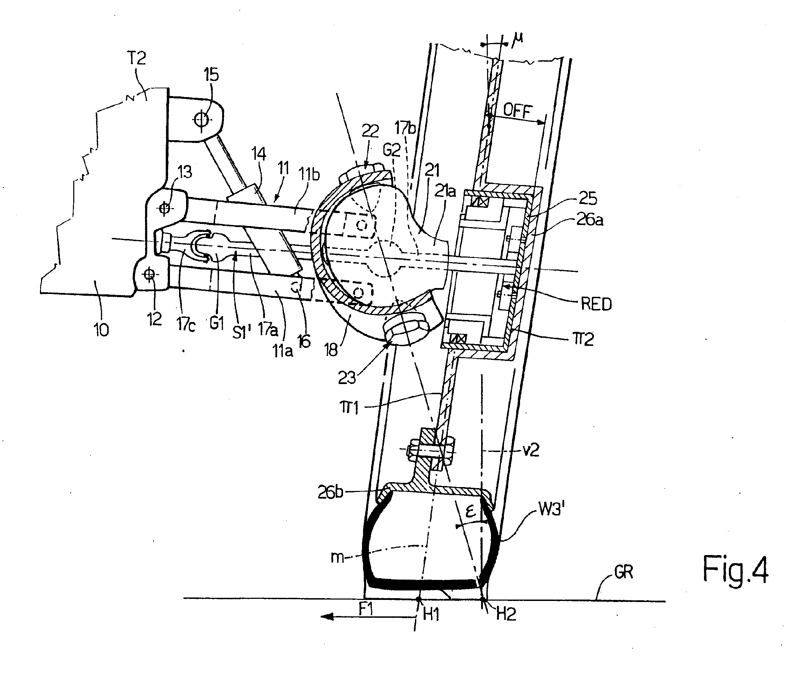

As stated with reference to Figures 1b and 1c, front axle Pa' comprises two axle shafts S1' and S2' (only axle shaft S1' of wheel W3' is shown in Figures 2-5). Axle shaft S1' is associated with the front support member 10 (Figure 4) integral with the body of tractor T2. Central axle part 2' is integrated in the front support member 10, which also centrally houses the differential casing (not shown) of the front axle Pa'. As seen in Figure 4, a drive shaft part 17c, operably connected to the differential casing, projects outwardly from the front support member 10. The shaft part 17c coincides with axle part 2' and thus is oriented orthogonal to the longitudinal axis S' of tractor T2.

A suspension 11 comprising a bottom arm 11a and a top arm 11b are attached to the side of the front support member 10. Bottom arm 11a and top arm 11b are hinged to member 10 by means of pins 12 and 13 respectively (Figure 4).

A hydraulic cylinder 14 is preferably, although not necessarily, hinged to bottom arm 11a to act as a shock-absorber or, more generally, to vary the stiffness of suspension 11. More specifically, hydraulic cylinder 14 is hinged to the body of tractor T2 by a pin 15 (Figure 4) and to bottom arm 11a by an articulated joint 16. The cylinder 14 is connected to a hydraulic circuit (not shown) of tractor T2, enabling pressure changes inside the cylinder 14.

Axle shaft S1' extends substantially centrally (as well in the vertical as in the horizontal plane) between arms 11a and 11b, and comprises an intermediate shaft 17a having two universal joints G1, G2 at its opposite ends for transmitting motion from the differential casing through the drive shaft 17c to wheel W3'. An outer shaft 17b extends from universal joint G2 to transmit motion to wheel W3'.

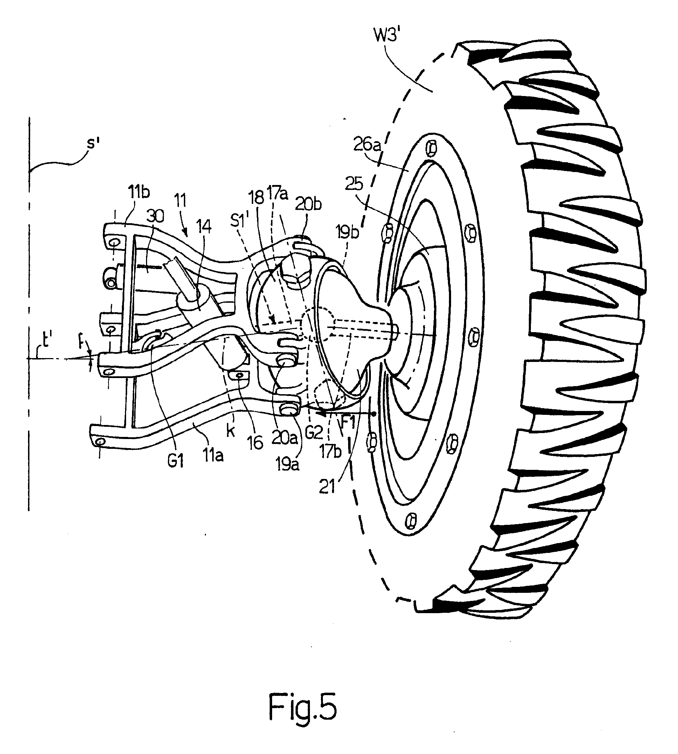

As seen in Figures 4 and 5, the cylinder 14 is attached sufficiently forwardly to the bottom arm 11a so that the intermediate shaft 17a, in its central horizontal position relative to the arms 11a, 11b, may pass behind cylinder 14 without interference.

In addition to the differential casing, the front support member 10 may advantageously, though not necessarily, house a device (not shown) for braking front wheels W3', W4'.

As seen in detail in Figures 2, 3 and 5, arms 11a, 11b are advantageously each in the form of a double fork, and support a substantially cup-shaped articulated support 18 to which the ends of arms 11a, 11b are hinged by pins 19a, 19b and pins 20a, 20b respectively. Articulated support 18 is shaped to house a hub carrier 21, in turn supporting a hub 25 (Figures 2, 4 and 5) of wheel W3' by means described in detail further on.

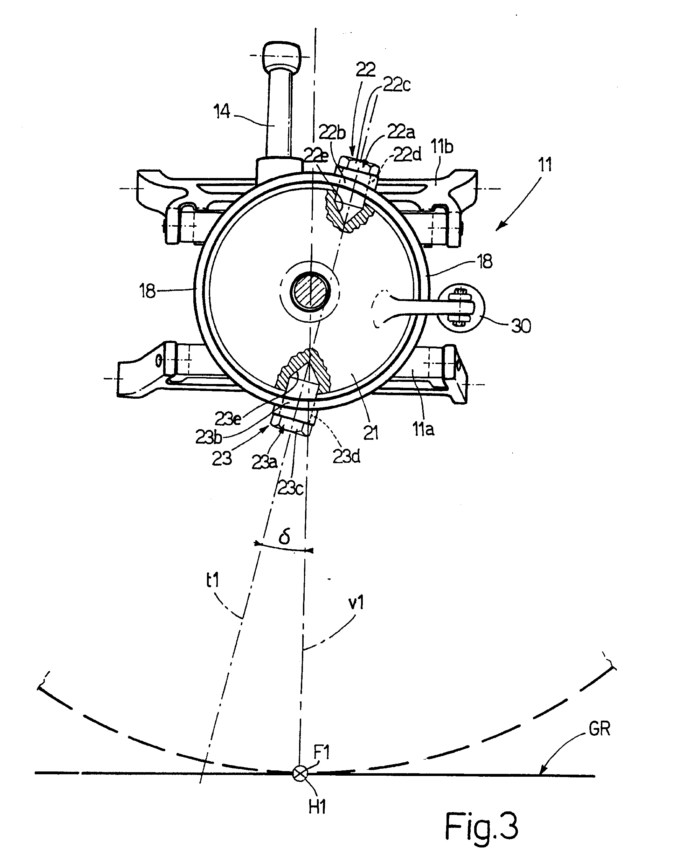

Hub carrier 21 is supported inside the cup-shaped articulated support 18 by means of two hinges 22, 23, each defined by the union of two substantially ogival male-female members (Figure 3). More specifically, the male member 22a, 23a of each hinge 22, 23 is housed partly inside a through seat 22b, 23b formed in the body of articulated support 18, and is fixed to the body of articulated support 18 by a threaded nut 22c, 23c screwed to a threaded shank 22d, 23d (Figure 3). Hub carrier 21 in turn comprises two ogival female cavities 22e, 23e for receiving respective ogival portions of male members 22a, 23a of hinges 22, 23.

Hub carrier 21 is normally cast, and, as shown in Figure 4, comprises, in the portion facing wheel W3', a through hole 21a for the passage of outer shaft 17b of axle shaft S1', which, as stated, transmits motion to wheel W3'. For this purpose, outer shaft 17b is connected (by known means) to hub 25, which is fitted with a disk 26a of wheel W3'. A portion of outer shaft 17b extends inside hub 25, which may house the component parts of a final reduction unit RED.

As shown in more detail in the top plan view of Figure 5, intermediate shaft 17a of axle shaft S1' has a longitudinal axis of symmetry k sloping by sweep-back angle f with respect to the line t' perpendicular to the longitudinal axis of symmetry s' of the body of tractor T2.

It will be appreciated from the above that, to avoid interference with the engine, the sweep-back configuration only starts at the side of the front support member 10. In other words, the front support member 10 is operable to bring the axle part 2' with integrated drive shaft 17c outwards towards its side, which is substantially flush with the engine mounted behind it, in a fully orthogonal orientation relative to the central longitudinal axis s' of tractor T2. As such, the space taken up by the engine is fully circumvented, while nevertheless allowing full functional use of the front support member 10 and application of the sweep-back configuration.

The forked shape of the arms 11a, 11b further enables connection to the front support member 10 in a manner such that the drive shaft S1', including partial shafts 17c, 17a and 17b, may be positioned centrally in the horizontal and vertical plane between the arms 11a, 11b, reducing overall load and stress influences.

Figures 2, 3, 5 show a hydraulic actuator 30, the rod 31 of which is connected by an articulated joint N to an arm 32 (Figure 2) integral with hub carrier 21. The movement of rod 31 is variable in sign and magnitude, and rotates hub carrier 21 around hinges 22, 23, and therefore turns wheel W3', as controlled by the user operating a steering device (not shown).

As shown in more detail in Figure 3, the axis t1 of hinges 22, 23 slopes by a so-called caster angle $\alpha$ with respect to a line v1 perpendicular to the ground GR. If no caster angle would be provided, then, upon turning, the rearward part of the wheel, lying in a horizontal plane through the central rotational axis of the wheel, would approach the engine the most. However, by virtue of caster angle $\alpha$, the mentioned horizontal plane is tilted, causing a lower part of the wheel W3' to become closest to the body of tractor T2 when turning. This is advantageous in that there is a normal ground clearance between the engine and the ground, which therefore is a preferential non-interference area between wheel W3' and the body of tractor T2.

Caster angle $\alpha$ in addition provides for improved steering and so-called "swing-back", i.e. causes wheels W3', W4' to swing back "naturally" to the straight position when the driver releases the steering wheel at the end of a turn.

In fact, if F1 (Figures 3, 4, 5) is the transverse horizontal component of the force exerted by ground GR on wheel W3' at point H1, force F1 possesses a moment with respect to caster axis t1. Since, when turning, force F1 faces inwards of the turning circle, a moment is generated which tends to straighten wheel W3', thus producing a self-aligning effect on wheel W3', as required for homologation approval of the steering system. The force F1 represented in the drawings is encountered when the wheel W3' would make a turn to the right. The above also applies to wheel W4'.

Caster angle $\alpha$ is also associated, in an inventive manner, with a pronounced kingpin angle $\alpha$. As shown in Figure 4, kingpin angle $\alpha$ can be defined as the angle between the projection of axis t1 in a vertical plane (the plane of Figure 4) through the axis of wheel W3', and a line v2 lying in said same plane and being perpendicular to ground GR. More specifically, line v2 may be selected to intersect the point H2 at which said projection of axis t1 in the sheet plane intersects ground GR.

Point H1, already referred to above, may be defined as the point at which the centerline m of wheel W3' intersects ground GR. In this context, segment H1H2 is referred to as the "ground arm" of the steering system.

The value of ground arm H1H2 is determined by:

- kingpin angle $\alpha$;
- the offset OFF of disk 26a, i.e. the distance between the plane $\pi$1 in which disk 26a rests on a rim 26b, and the plane $\pi$2 in which disk 26a rests on hub 25; in the present case, offset OFF is also defined as the distance between plane $\pi$1 and the outermost part of rim 26b;
- the camber $\mu$, i.e. the angle formed by the intersection of centerline m with a line perpendicular to ground GR, in particular line v2; and
- the general configuration of the hub carrier 21/hub 25 system (Figure 4).

As will be seen furtheron, to achieve the desired effects of avoiding collision of the front wheels with the tractor body upon full steering lock, and in addition to self-alignment of wheels W3', W4', ground arm H1H2 must have a negative value, i.e. point H2 must be located outwards of point H1 with respect to the centerline of tractor T2.

Obviously, to increase the distance between point H2 and point H1, the kingpin angle $\alpha$ and camber $\mu$ have to be increased. If camber $\mu$ would be zero, then a negative value of H1H2 still could be obtained by increasing angle $\alpha$. However, there are limitations to the maximum value of angle $\alpha$ since the more kingpin angle $\alpha$ deviates from the vertical, the larger the forces become of the wheel on the hinges 22, 23 and on the suspension structure. These forces consist of reaction torque developed by the planetary reductor RED on the wheel hub 25. The hinges 22, 23 are designed to withstand prevalent axial forces, instead of side forces. Increasing angle $\alpha$ too much would therefore jeopardise the lifetime of the hinges. As seen in Figure 4, having a camber $\mu$ other than zero shifts the lower part of the wheel W3' closer to the tractor body whereby the intersection H2 at the ground of the projected axis through the hinges 22, 23 will shift towards the outer side of the wheel. This therefore helps in obtaining a negative H1H2 value without having to increase kingpin angle $\alpha$ beyond an acceptable limit.

Moreover, a pronounced camber $\mu$ again has the additional advantage of moving the upper part of the wheel further away from the tractor body, as such allowing an increased turning angle without the risk of letting the wheel collide with the tractor body. The fact that the lower part of the wheel is closer to the tractor has no negative influence on the steering as there anyhow is a free space between the engine and the ground, as already explained.

A more pronounced offset OFF also advantageously increases the value of H1H2. However, there are limitations to the value OFF as it would not be desirable to let the final reduction RED extend outwards from the side face of the wheel W3'. Moreover, offset OFF will also be influenced by the suspension geometry and the track width of the tractor.

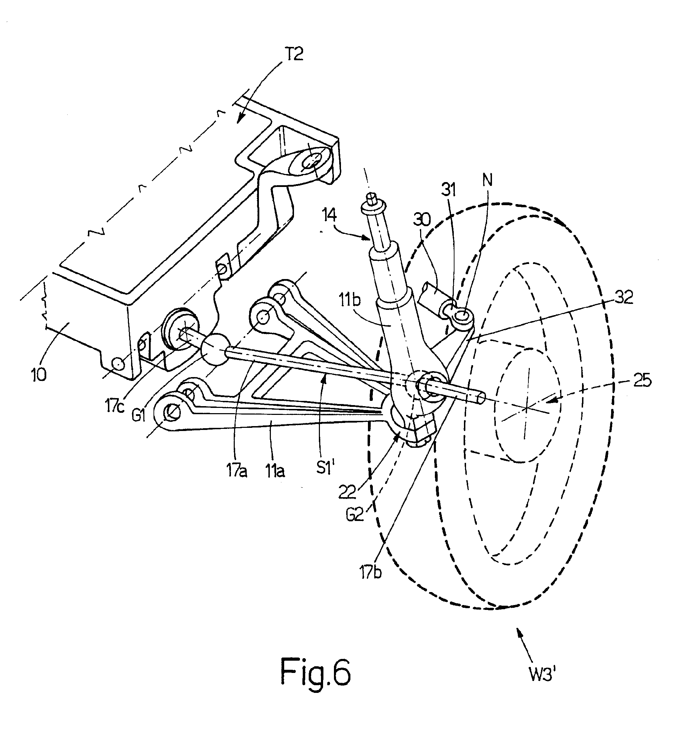

Figures 6-10 show a second embodiment of the present invention, in which the suspension is of the McPherson type, employing a suspension arm connected to an oscillating, bottom triangle. The overall concept described with reference to Figures 1a-1c and the first embodiment also applies to this embodiment. In the following description, like components have been given like reference numbers.

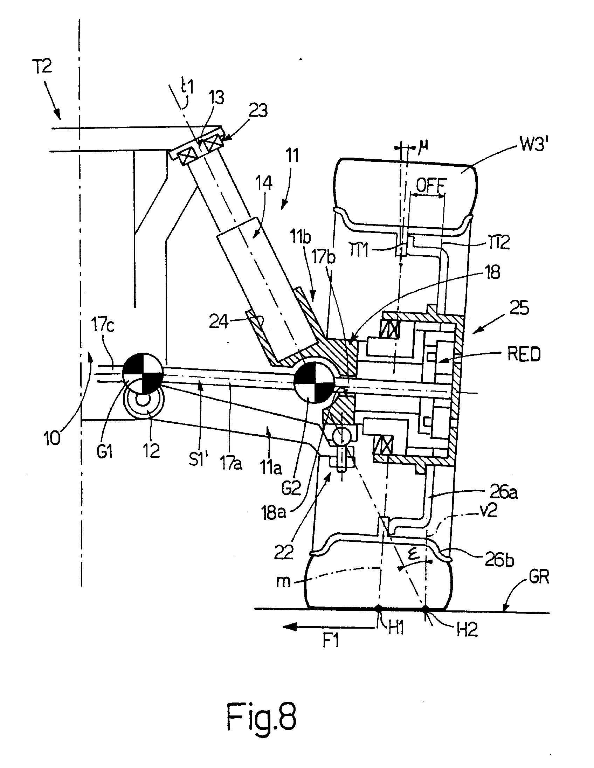

In comparable fashion to the first embodiment, axle shaft S1' again is associated with the front support member 10 (Figures 6 and 8) integral with the body of tractor T2. A suspension 11 is attached to the member 10 and comprises a bottom arm 11a and a telescopic top arm 11b. Bottom arm 11a is hinged to member 10 by means of pins 12 (Figure 8). The telescopic top arm 11b is connected at one end to an extended upper part of the front support member 10 by a pin 13 and an articulated joint 23 and at the other end to an articulated support 18 by a strong bracket.

Telescopic top arm 11b comprises a telescopic hydraulic cylinder 14 which is connected to a hydraulic circuit (not shown) of tractor T2 and which acts as a shock-absorber or, more generally, provides for varying the stiffness of suspension 11.

Axle shaft S1' extends between the front support member 10 and the wheel W3'. S1' is provided substantially centrally above the arm 11a and runs through the support 18 underneath the cylinder 14. Axle shaft S1' comprises an intermediate shaft 17a with universal joints G1, G2 on the ends (Figure 8); an outer shaft 17b extending from joint G2 to transmit motion to wheel W3'; and an inner shaft 17c which is connected to the differential casing inside the front support member 10.

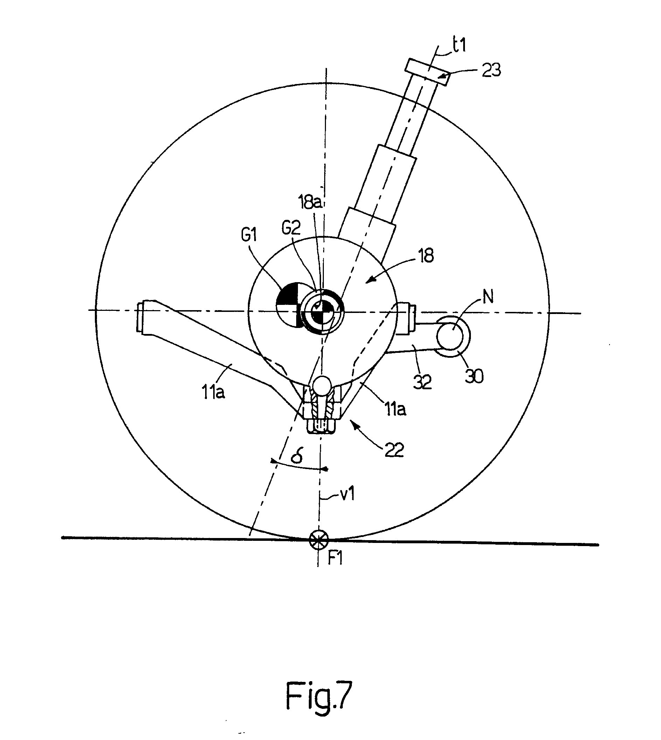

As shown in detail in Figures 6 and 7, arm 11a is advantageously triangular, and arm 11b comprises a cylindrical connecting bracket 24 between cylinder 14 and the articulated support 18, which acts as hub carrier. Arms 11a and 11b therefore support the articulated support 18, which is substantially cup-shaped and has a bottom attachment for connection to arm 11a by means of an articulated head 22, and a top attachment for connection to cylinder 14 by means of the fixed bracket 24.

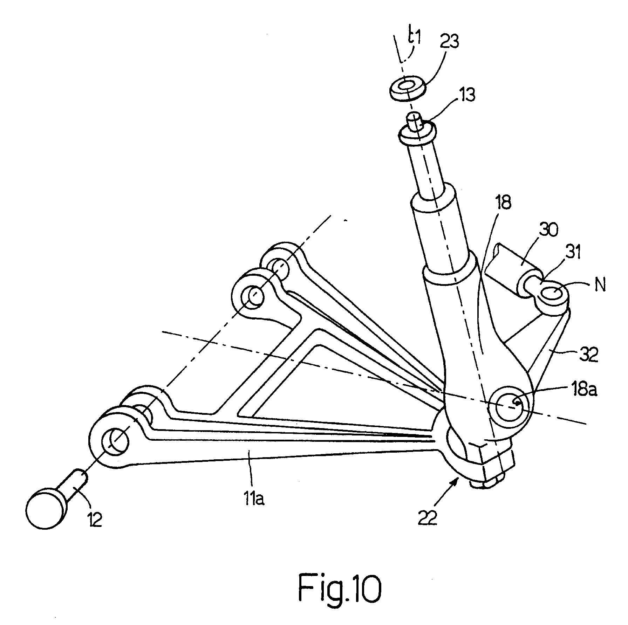

With reference to Figure 10, articulated support 18 therefore forms part of an articulated system defined by bottom arm 11a hinged on one side to the front support member 10 by the pins 12, and connected on the other side by articulated head 22 to the articulated support 18, in turn bracketed to cylinder 14, which itself is connected through pin 13 and articulated joint 23 back to the front support member of tractor T2.

Suspension 11 therefore allows wheel W3' to turn - by articulated support 18 rotating about axis t1 (Figure 8) - and also to shake vertically by virtue of the characteristics of telescopic cylinder 14.

Articulated support 18 is normally cast, and, as shown in Figure 10, comprises, in the portion facing wheel W3', a through hole 18a for the passage of outer shaft 17b of axle shaft S1', which, as stated, transmits motion to wheel W3'. For this purpose, outer shaft 17b is connected (by known means) to a hub 25, which is fitted with a disk 26a of wheel W3' (Figure 8). A portion of outer shaft 17b extends inside hub 25, which may house the component parts of a reducer or final reduction RED.

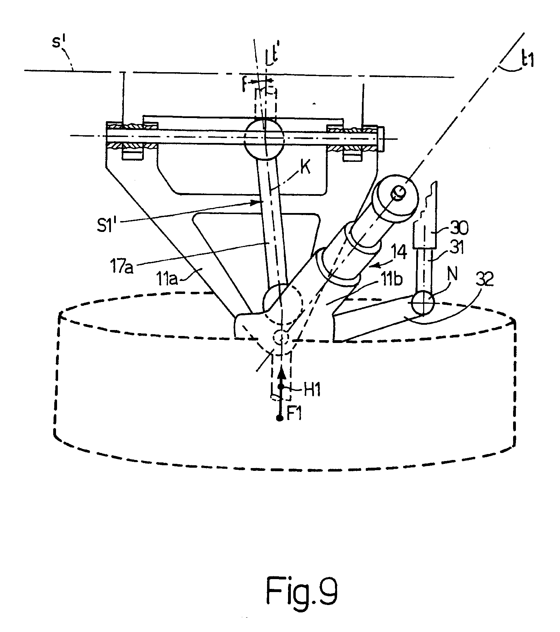

As shown in more detail in Figure 9, and comparable to the first embodiment, intermediate shaft 17a of axle shaft S1' has a longitudinal axis of symmetry K sloping by sweep-back angle f with respect to the line t' perpendicular to the longitudinal axis of symmetry s' of the body of tractor T2. Figures 6, 7, 9 also show a hydraulic actuator 30, the rod 31 of which is connected by an articulated joint N to an arm 32 integral with articulated support 18. The movement of rod 31 is variable in sign and magnitude, and rotates articulated support 18, and therefore turns wheel W3', as controlled by the user operating a steering device (not shown).

As shown in more detail in Figure 7, the axis t1 of articulated joints 22, 23 slopes by the so-called caster angle $\alpha$ with respect to a line v1 perpendicular to the ground GR. The caster angle $\alpha$ provides for the same effects and advantages as already discussed with reference to the first embodiment. It is observed however that, contrary to the first embodiment, axis t1 runs through support arm 11b which at the same time is part of the suspension mechanism.

Caster angle $\alpha$ is also associated, in inventive manner, with a pronounced kingpin $\alpha$ (Figure 8). As regards the kingpin angle $\alpha$, force F1, points H1, H2, angle $\mu$ and offset OFF, reference may be made to what has already been stated relative to the first embodiment in Figures 2-6.

With reference to both embodiments, by combining the effect described of caster angle $\alpha$ and the effect of a pronounced negative ground arm H1H2, the vertical of the center of wheel W3' moves away from the body of tractor T2 when turning, resulting in wheel W3' not coming as close to the body of tractor T2 as in conventional configurations.

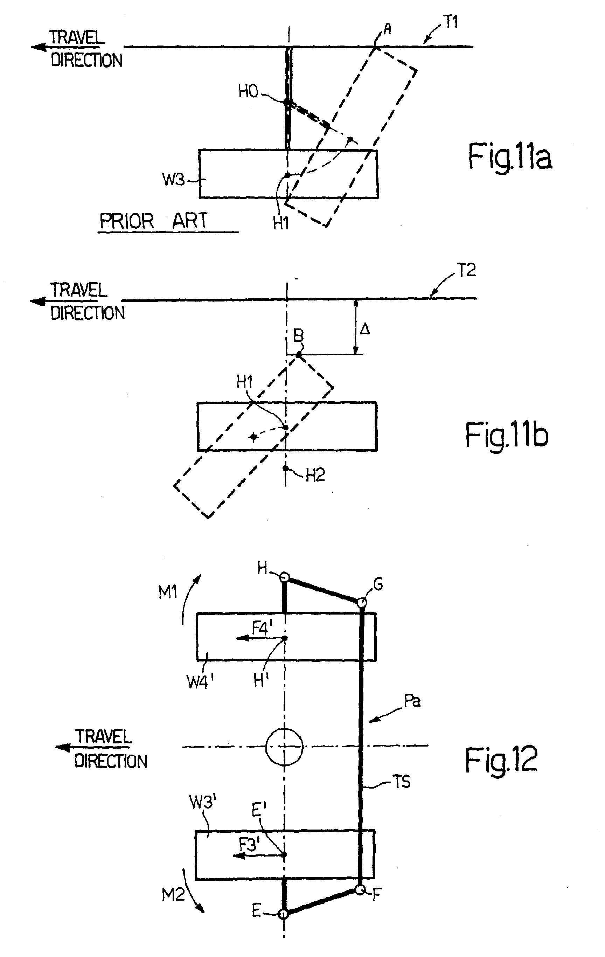

In fact, as shown in Figure 11a, a known wheel W3 turns about a point H0 lying interiorly of the centerline plane of wheel W3, so that, when turned about this point H0 by the steering actuator (not shown in Figure 11a), wheel W3 would collide with the body of tractor T1 at point A. Conversely, as depicted in Figure 11b, with a negative ground arm H1H2, wheel W3' turns about point H2 outside the centerline plane of wheel W3' into the configuration shown in Figure 11b, in which the point on wheel W3' closest to the body of tractor T2 is point B. As can be seen, adopting a negative ground arm H1H2, the point on wheel W3' closest to the body of tractor T2 is separated from the body of tractor T2 by a given distance $\alpha$, i.e. wheel W3' does not come as close to the body of tractor T2 when executing a full steering lock.

Distance $\alpha$ thus provides for fully exploiting the turning angle obtained by adding the sweep-back angle f to the maximum angle $\alpha$ permitted by the joint, thus drastically reducing the risk of interference between wheel W3' and the body of tractor T2.

Although not shown in Figure 11b, it will be appreciated that the outer wheel has a comparable negative ground arm which will make the wheel move away from the chassis in a backward direction as opposed to the forward direction of the inner wheel shown in Figure 11b.

Another collateral effect of negative ground arm H1H2 is a further self-aligning phenomenon described with reference to Figure 12.

Figure 12 shows a schematic plan view of front axle Pa with a negative ground arm. Points E' and H' indicate the spots at which respective wheels W3' and W4' contact ground GR. Points E and H are the virtual turning points (intersections of respective axes t' with ground GR) of wheels W3' and W4'. Segments E'E and H'H therefore represent the ground arms of respective wheels W3' and W4'. F and G indicate the articulation points of the connecting steering rod TS, which physically connects the wheels.

Suppose the front differential lock is engaged, as is normal for a tractor in heavy towing conditions, points H', E' of wheels W4', W3' are subjected to the forces F4', F3' exchanged between wheels W4', W3' and ground GR.

When the traction of both wheels W3', W4' on ground GR is the same, the clockwise moment M1 of force F4' and the anticlockwise moment M2 of force F3' are identical in absolute value and opposite in sign, and produce on steering rod TS a balanced compressive stress by virtue of its moments being equal in absolute value, so that no stress is produced on the steering wheel (not shown) connected mechanically to steering rod TS.

Supposing now that the wheel W3' loses traction with respect to wheel W4', then a reduction in moment M2 is experienced because, for a given ground arm EE', the value of force F3' has decreased. Moment M1 generated by wheel W4' therefore becomes predominant, so that tractor T2 tends to turn to the right, i. e. the reaction of steering rod TS to the unbalance between moments M1, M2 is a tendency to turn right.

At tractor level, however, the loss of traction by wheel W3' is converted into a tendency of the tractor to turn left on account of the predominant forces on the right side. In a force configuration in which the right side pulls harder than the left (which has lost traction), the tractor would tend at this point to turn left, since the resisting force applied to the tractor is assumed along its centerline. The tractor would therefore tend to turn left, at the same time creating a feedback signal inducing a right turn as a result of the forces on the steering rod TS transmitted to the steering wheel.

If the driver, therefore, were to release the steering wheel upon the above loss of traction, the tractor would automatically turn right simultaneously with its tendency to advance leftward. The driver, who in actual fact normally keeps hold of the steering wheel, is therefore induced in real time to effect a steering correction to counteract in advance the effects of the unbalance in the external force configuration.

By virtue of the negative ground arms EE', HH', the tractor transmits to the driver a real-time signal indicating a forthcoming loss in directional stability, which can be counteracted directly by the driver simply responding to the incoming signal on the steering wheel, or is corrected automatically by the system if the driver should release the steering wheel.

In other words, if wheel W3' loses traction, the tractor would tend to turn left through lack of pull on the left and a predominant pull on the right, but the steering system automatically turns right, so that either the driver senses a reaction on the steering wheel inducing a right turn, or, even if the steering wheel is released, the tractor turns itself automatically to maintain direction.

The advantages of the suspended articulated axle for vehicles, in particular farm tractors, according to the present invention are as follows:

(a) reduction in the turning radius of the tractor by:

- increasing the turning angle of the inside wheel beyond the limit imposed by the universal joint;
- reducing the wheelbase of the tractor while preserving a convenient structure in which the front axle is secured to the structure in front of, as opposed to beneath, the engine;

(b) increasing the distance between the wheel and the tractor body when turning, to prevent interference when executing tight turns;

(c) self-alignment in the event of a loss of traction with the front differential lock engaged; and

(d) in the second embodiment (McPherson suspension), the possibility of implementing reliable, low-cost solutions as demanded by medium-small range tractors.

## Claims

1. A suspended, articulated front axle (Pa') for vehicles (T2), comprising a central axle body (2') and two axle shafts (S1', S2'), each axle shaft (S1', S2') being associated with a respective front wheel (W3', W4'); and

    **characterized in that** :

    - the axle shafts (S1', S2') extend laterally from said central body (2'); and
    - each axle shaft (S1', S2') comprises at least one portion (17a) whose longitudinal axis of symmetry (k) slopes by a sweep-back angle (f) with respect to a line (t') perpendicular to a longitudinal axis of symmetry (s') of the vehicle (T2); said sweep-back angle (f) being such that the outer end of said sloping portion (17a) is located further back with respect to the inner end of said portion (17a) in the common forward travelling direction of the vehicle (T2).

2. A front axle according to claim 1, **characterized in that** said sweep-back angle (f) produces a twofold reduction in turning radius :

    - a first reduction by reducing the wheelbase from a first value (WB1) to a second value (WB2), so that the turning radius is reduced from a first value (R1) to a second value (R2); and
    - a second reduction by enabling the turning angle of the inner wheel (W3') to increase from a first value ($\alpha$) to a second value ($\alpha$+f), whereby the turning radius is further reduced from said second value (R2) to a third value (R2'); said first turning angle value ($\alpha$) being upwardly limited by a first transmission joint (G2) between each wheel (W3', W4') and its associated axle shaft (S1', S2').

3. A front axle according to claim 1 or 2, **characterized in that** the maximum value of said sweep-back angle (f) equals $\alpha''/2$, whereby $\alpha''$ represents the difference in turning angle between the inner and outer front wheel of the vehicle when a turn is effected.

4. A front axle according to any of the preceding claims, **characterized in that** said portion (17a) sloping by the sweep-back angle (f) is an intermediate shaft (17a) of said axle shaft (S1', S2').

5. A front axle according to claim 4, when appended directly or indirectly to claim 2, **characterized in**

**that** said intermediate shaft (17a) is connected at one end to an inner shaft (17c) by a second joint (G1), and at the other end to an outer shaft (17b) by said first transmission joint (G2).

6. A front axle according to claim 5, **characterized in that** said joints (G1, G2) are universal joints.

7. A front axle according to any of the preceding claims, **characterized in that** each axle shaft (S1', S2') is associated with a suspension (11) comprising a bottom arm (11a) and a substantially parallel top arm (11b), both of which are in the form of a double fork and are connected at their outer end to a cup-shaped, articulated support (18); said suspension (11) presenting the same sweep-back angle (f) as each said axle shaft (S1', S2').

8. A front axle according to claim 7, **characterized in that** said articulated support (18) is designed to house a hub carrier (21) in turn supporting a hub (25); the hub carrier (21) being hingeably connected to the articulated support (18) by means of a set of aligned hinges (22, 23).

9. A front axle according to claim 7 or 8, **characterized in that** the bottom and top arm (11a, 11b) of said suspension (11) are connected at their inner ends to a lateral side of a front support member (10), provided in front of the engine of the vehicle and forming part of the vehicle chassis; said front support member (10) housing said central axle body (2').

10. A front axle according to claims 7 to 9, **characterized in that** the bottom arm (11a) is hingeably connected to one end of a hydraulic cylinder (14), the other end being connected to the chassis of the vehicle, for varying the stiffness of the suspension (11) as a whole.

11. A front axle according to claims 7 to 10, **characterized in that** each axle shaft (S1', S2') is positioned substantially centrally inbetween said bottom and top arms (11a, 11b).

12. A front axle according to any of the claims 1 to 6, **characterized in that** each said axle shaft (S1', S2') is associated with a suspension (11) comprising a bottom arm (11a) and a telescopic top arm (11b); said top arm (11b) extending under an angle relative to said bottom arm (11a), and both said bottom arm (11a) and top arm (11b) being connected to a front support member (10) provided in front of the engine of the vehicle.

13. A front axle according to claim 12, **characterized in that** said suspension (11) is of a McPherson type.

14. A front axle according to any of the preceding claims, **characterized in that**, in order to reduce the risk of collision between a wheel (W3', W4') and the chassis of the vehicle upon effecting a full steering lock, the caster angle ($\alpha$) of the wheel (W3', W4') is chosen such that, upon turning, the wheel approaches the centerline s' of the vehicle more in a lower area than in an upper area.

15. A front axle according to claim 14 when appended directly or indirectly to claim 8 or 12, **characterized in that** the caster angle ($\alpha$) is defined, as seen in a side view of a wheel (W3', W4'), as the acute angle between a vertical line (v1) and a line (t1) through the axis of either said hinges (22, 23) or said telescopic top arm (11b).

16. A front axle according to claim 15, **characterized in that** the projection of said line (t1) through the axis of either said hinges (22, 23) or said telescopic top arm (11b) on a vertical plane perpendicular to the longitudinal center line (s') of the vehicle intersects the ground (GR) at a first point (H2) which is outwardly offset from a central point of contact (H1) of the wheel (W3', W4') with the ground (GR); said projection of said line (t1) forming an acute kingpin angle ($\alpha$) with a vertical line (v2).

17. A front axle according to claim 16, **characterized in that** said first point (H2) represents the virtual turning point of a wheel (W3', W4') such that, upon turning a wheel, the central point of contact (H1) of a wheel with the ground moves away from the longitudinal centerline (s') of the vehicle.

18. A front axle according to claims 16 or 17, **characterized in that**, to increase the distance between said first point (H2) and said central point of contact (H1), the wheel (W3', W4') is positioned under a camber angle ($\mu$); the camber angle ($\mu$) being defined as the acute angle between a center line (m) of the wheel as seen in the front view thereof and a vertical line on the ground (GR).

19. A front axle according to claim 18, **characterized in that**, by increasing camber angle ($\mu$), a top portion of the wheel (W3', W4') is moved away from the vehicle chassis.

20. A front axle according to claim 17 to 19, **characterized in that** each front wheel has a virtual turning point (H2) which is outwardly offset from a central point of contact (H1) of the wheel (W3', W4') with the ground (GR), the distance between said points being referred to as a negative ground arm (EE', HH'), whereby, in the event of either of the front wheels (W3', W4') losing traction, a correction is made on the steering wheel to counteract the change in direction produced by the loss in traction.

**21.** A front axle according to claim 20, **characterized in that** the loss in traction is converted into a signal on the steering wheel, such as to induce manual user correction of the steering direction of the vehicle (T2).

**22.** A front axle according to claim 20, **characterized in that** the loss in traction is converted into a signal on the steering wheel, such as to induce automatic correction of the steering direction of the vehicle (T2).

EP 1 356 962 A1

PRIOR ART

Fig.1a

Fig.1b

Fig.1c

Fig.2

EP 1 356 962 A1

Fig.3

Fig.4

Fig.5

T2

14

11b

30

31

N

32

25

17c

G1

17a

11a

S1'

22

G2

17b

10

# Fig.6

W3'

Fig.7

Fig.8

Fig.9

Fig.10

EP 1 356 962 A1

TRAVEL
DIRECTION

H0

W3

PRIOR ART

H1

A

T1

Fig.11a

TRAVEL
DIRECTION

B

H1

H2

T2

Δ

Fig.11b

H

G

M1

F4'

W4'

H'

Pa

TRAVEL
DIRECTION

TS

W3'

E'

F3'

M2

E

F

Fig.12

22

**European Patent Office**

**EUROPEAN SEARCH REPORT**

Application Number

EP 03 10 1121

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 081 049 A (YOUMANS DONALD W) 28 March 1978 (1978-03-28) | 1-6,14, 15 | B60G3/24 B60G3/26 |
| Y | * abstract; figures 1-6,8,9 * <br><br> * column 5, line 56, paragraph 2 - column 6, line 56 * | 7-13,16, 17,20-22 | B60K17/30 B60K17/22 B62D49/06 |
| Y | US 6 036 201 A (MCKINSTRY BRUCE B ET AL) 14 March 2000 (2000-03-14) | 7-11 | |
| A | * column 7, line 38 - line 62; figures 13,14 * <br> * column 3, line 41 - line 47 * | 1-6 | |
| Y | US 2 624 592 A (MACPHERSON EARLE S) 6 January 1953 (1953-01-06) * figures 7,8 * | 12,13 | |
| Y | DE 23 48 849 A (TEVES GMBH ALFRED) 10 April 1975 (1975-04-10) * figure 2 * | 16,17, 20-22 | |
| A | US 4 249 631 A (HUNEKE WALTER) 10 February 1981 (1981-02-10) * abstract * | 1 | **TECHNICAL FIELDS SEARCHED** (Int.Cl.7) <br><br> B60G <br> B60K <br> B62D |
| A | US 4 069 887 A (KOEPFLI JOSEF) 24 January 1978 (1978-01-24) * abstract * | 1 | |
| A | FR 2 609 673 A (CLAUDE BERNARD) 22 July 1988 (1988-07-22) * figures 7,8 * | 1 | |

The present search report has been drawn up for all claims

| Place of search | Date of completion of the search | Examiner |
|---|---|---|
| THE HAGUE | 14 August 2003 | Torsius, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 03 10 1121

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2003

| Patent document cited in search report | | Publication date | Patent family member(s) | | Publication date |
|---|---|---|---|---|---|
| US 4081049 | A | 28-03-1978 | NONE | | |
| US 6036201 | A | 14-03-2000 | CA | 2321056 A1 | 26-08-1999 |
| | | | EP | 1056607 A2 | 06-12-2000 |
| | | | WO | 9942311 A2 | 26-08-1999 |
| US 2624592 | A | 06-01-1953 | GB | 645900 A | 08-11-1950 |
| DE 2348849 | A | 10-04-1975 | DE | 2348849 A1 | 10-04-1975 |
| US 4249631 | A | 10-02-1981 | DE | 2821178 A1 | 15-11-1979 |
| | | | CA | 1125816 A1 | 15-06-1982 |
| | | | IT | 1116087 B | 10-02-1986 |
| US 4069887 | A | 24-01-1978 | CH | 591968 A5 | 14-10-1977 |
| | | | DE | 2706229 A1 | 18-08-1977 |
| | | | FR | 2341448 A1 | 16-09-1977 |
| | | | GB | 1518922 A | 26-07-1978 |
| | | | IT | 1078205 B | 08-05-1985 |
| | | | JP | 1161870 C | 10-08-1983 |
| | | | JP | 52097524 A | 16-08-1977 |
| | | | JP | 57057309 B | 03-12-1982 |
| | | | SU | 1015819 A3 | 30-04-1983 |
| FR 2609673 | A | 22-07-1988 | FR | 2609673 A1 | 22-07-1988 |

For more details about this annex : see Official Journal of the European Patent Office, No. 12/82